# EUROPÄISCHE PATENTSCHRIFT

(11) **EP 1 614 342 B1**
(45) Veröffentlichungstag und Bekanntmachung des Hinweises auf die Patenterteilung: **30.04.2008**
(21) Anmeldenummer: 05010837.2
(22) Anmeldetag: 19.05.2005
(51) Int. Cl.: A01F 29/22

(54) **Klopfsensoranordnung**
Knock sensor assembly
Dispositif avec capteur de cliquetis

(30) Priorität: 06.07.2004 DE 102004032829
(43) Veröffentlichungstag der Anmeldung: 11.01.2006
(73) Patentinhaber: CLAAS Selbstfahrende Erntemaschinen GmbH, 33428 Harsewinkel (DE)
(72) Erfinder: Reckermann, Michael, 48346 Ostbeven (DE); Jeppe, Eckehard, 34369 Hofgeismar (DE)

(56) Entgegenhaltungen:
- EP-A- 0 291 216
- EP-A- 0 335 332
- DE-A1- 4 134 957

## Beschreibung

Die Erfindung betrifft eine Klopfsensoranordnung und ein Verfahren zu deren Betreiben in einer landwirtschaftlichen Arbeitsmaschine nach dem Oberbegriff der Ansprüche 1 und 12.

Gemäß der DE 41 34 957 sind Klopfsensoranordnungen zur Überwachung des Verstellvorganges einer Gegenschneide in sogenannten Feldhäckslern weit verbreitet. In dem dargestellten Ausführungsbeispiel ist die Klopfsensoranordnung einer im Einlaufbereich der Häckseltrommel angeordneten und auf die Häckseltrommel zu- und von dieser wegbewegbaren Gegenschneide obenseitig zugeordnet. Wegen des durch den Schnittvorgang bedingten Verschleißes der auf der umlaufenden Häckseltrommel angeordneten Häckselmesser müssen deren Schneidkanten in regelmäßigen Abständen geschliffen werden. In der Regel ist der Häckseltrommel hierfür obenseitig eine Schleifeinrichtung zugeordnet, die fernbetätigbar ist und mittels eines Schleifsteines die Schneidkanten der Häckselmesser nachschleift. Dabei wird die Schneidkante der Häckselmesser allmählich abgetragen, sodass sich der durch die Schneidkanten der umlaufenden Häckselmesser gebildete Hüllkreis mit jedem Schleifvorgang verkleinert und wobei zugleich der Abstand der Gegenschneide zu diesem Hüllkreis zunimmt. Damit nun stets ein sicherer, energieeffizienter Schnitt gewährleistet ist, wird die Gegenschneide nach jedem oder einer Reihe von Schleifvorgängen in ihrer Position zu den umlaufenden Häckselmessern neu eingestellt. Dabei ist es wichtig, dass die Gegenschneide zur Realisierung einer wirkungsvollen Gegenhalterfunktion während des Schnittvorganges so nah wie möglich an die umlaufenden Häckselmesser herangeführt wird. Zugleich darf die Gegenschneide aber nicht in den Hüllkreis der Häckselmesser eintauchen, da dies bei Inbetriebnahme der Häckseltrommel wegen der dann auftretenden Kollision zwischen Gegenschneide und umlaufenden Häckselmessern zu schweren Beschädigungen an der Häckseltrommel führen würde. Damit dies ausgeschlossen werden kann, ist der Gegenschneide eine Klopfsensoranordnung zugeordnet, die durch Sensierung von Körperschall ein dem Abstand der Gegenschneide zu den umlaufenden Häckselmessern proportionales Körperschallsignal generiert, welches zur Einstellung des Abstandes zwischen Gegenschneide und Häckseltrommel herangezogen wird. Damit die Klopfsensoren ein zuverlässiges Klopfsignal generieren ist es von erheblicher Bedeutung, dass zwischen der schallleitenden Gegenschneide und den Klopfsensoren eine sichere Verbindung besteht, sodass die sich in der Gegenschneide fortpflanzenden Schallwellen von den Klopfsensoren auch detektierbar sind. Wegen der zum Teil sehr hohen Stoß- und Schwingungsbelastungen während des Einsatzes des Feldhäckslers kann es zu Funktionsstörungen in der Klopfsensoranordnung kommen, die zum Teil auf die Lockerung der Verbindung zwischen der Gegenschneide und der Klopfsensoranordnung sowie den beschädigungsbedingten Ausfall der Klopfsensoranordnung zurückzuführen sind. Die damit verbundene Abweichung der generierten Körperschallsignale von den realen Bedingungen, kann dazu führen, dass die auf der Auswertung dieser Körperschallsignale basierende Einstellung des Abstandes der Gegenschneide zu den umlaufenden Häckselmessern zu Fehlern in der Abstandsermittlung führt. Im ungünstigsten Fall werden dann zu geringe Abstände eingestellt, sodass es zur Kollision zwischen der Gegenschneide und den umlaufenden Häckselmessern und damit zu schweren Beschädigungen an der Häckseleinrichtung und der ihr nachgeordneten Organe kommen kann.

Es ist deshalb Aufgabe der Erfindung eine Klopfsensoranordnung vorzuschlagen, welche die beschriebenen Nachteile des Standes der Technik vermeidet und insbesondere die qualitative Hochwertigkeit der durch die Klopfsensoranordnung generierten Klopfsignale sicherstellt.

Diese Aufgabe wird erfindungsgemäß durch die kennzeichnenden Merkmale der Ansprüche 1 und 12 gelöst.

Indem dem Bauteil in welchem Körperschallschwingungen sensiert werden sollen ein erster und zumindest ein weiterer Sensor zur Detektion von Körperschallschwingungen zugeordnet ist und diese wenigstens zwei Sensoren als Körperschallquelle und/oder als Körperschallempfänger betreibar sind, wird eine Anordnung geschaffen, die es ermöglicht, dass jeder der Sensoren durch den anderen Sensor geeicht werden kann. Auf diese Weise wird sichergestellt, dass fehlerhaft arbeitende Sensoren frühzeitig erkannt werden und die Fehlerhaftigkeit beseitigbar ist, sodass Beschädigungen an dem Häckselaggregat und dem ihm nachgeordneten Arbeitsorganen weitgehend vermieden werden können.

Im konstruktiv einfachsten Fall wird die Funktionsüberprüfung der Sensoren dadurch realisiert, dass der eine Sensor als Körperschallquelle und der andere Sensor als Empfänger des von dem einen Sensor generierte Körperschalls betrieben wird.

Damit eine qualitative Bewertung der Sensoren vorgenommen werden kann, ist in einer vorteilhaften Weiterbildung der Erfindung der Sensoranordnung eine elektronische Auswerteinheit zugeordnet, die die von der Körperschallquelle generierten Erregersignale mit den von dem Körperschallempfänger generierten Körperschallsignalen vergleicht und das Vergleichsergebnis visualisiert.

Ein einfach strukturierter Vergleichsalgorithmus ergibt sich dann, wenn in dem Vergleichsalgorithmus ein Grenzwertbereich für die Körperschallsignale definiert ist und die Grenzwerte editierbar sind. Dies hat insbesondere den Vorteil, dass die Arbeitsweise der Sensoren sehr feinfühlig auf äußere Randbedingungen abgestimmt werden kann, sodass beispielsweise das Wärmedehnungsverhalten unterschiedlicher Materialien und Eigenschwingungen der landwirtschaftlichen Arbeitsmaschine besser berücksichtigbar sind.

In vorteilhafter Weiterbildung der Erfindung können die Sensoren als an sich bekannte piezoelektrische Klopfsensoren ausgeführt sein. Dies hat insbesondere den Vorteil, dass diese Technologie sehr ausgereift ist und eine hohe Funktionssicherheit aufweist.

Damit auch das Erregersignal der Körperschallquelle an verschiedenste äußere Randbedingungen, wie etwa das Eigenschwingverhalten der landwirtschaftlichen Arbeitsmaschine, anpassbar ist, können in vorteilhafter Weiterbildung der Erfindung sowohl die Frequenz als auch die Amplitude des Erregersignals verändert werden.

Eine weitere Vereinfachung der Signalverarbeitung wird dann erreicht, wenn der Frequenzgang der Sensoren einstellbar ist. Auf diese Weise kann die Empfindlichkeit der Sensoren auf die zu sensierenden Erregerfrequenzen abgestimmt werden.

Damit die Klopfsensoranordnung zuverlässig arbeiten kann, ist es von Vorteil, wenn das Bauteil in welchem Körperschallschwingungen sensiert werden sollen eine gute Schallwellenleitfähigkeit aufweist.

In einer bevorzugten Ausführungsform wird die Klopfsensoranordnung in einer als Feldhäcksler ausgeführten landwirtschaftlichen Arbeitsmaschine eingesetzt, wobei das die Klopfsensoranordnung aufnehmende Bauteil von einer sogenannten Gegenschneide gebildet wird. Zur Verbesserung der Zugänglichkeit, insbesondere zu Wartungs- und Reparaturzwecken, sind die Klopfsensoren in vorteilhafter Weiterbildung der Erfindung lösbar an den Stirnseiten der Gegenschneide angeordnet.

Erfindungsgemäß zeichnet sich das Verfahren zum Betreiben der Klopfsensoranordnung dadurch aus, dass dem Bauteil ein erster Sensor und zumindest ein weiterer Sensor zur Detektion von Körperschallschwingungen zugeordnet ist und wobei einer der Sensoren mit einem Erregersignal definierter Amplitude und Frequenz erregt wird und zugleich an dem weiteren Sensor das von dem Erregersignal abhängende Körperschallsignal ermittelt wird und in einer Recheneinheit mittels Vergleich eine qualitative Bewertung des Körperschallsignals und damit eine qualitative Bewertung des jeweiligen Sensors vorgenommen wird.

Zur besseren Anpassung der Klopfsensoranordnung an verschiedenste äußere Bedingungen sieht das erfindungsgemäße Verfahren zudem vor, dass das Erregersignal variierbar ist und das hieraus generierte Körperschallsignal grenzwertabhängig und/oder frequenzgangabhängig ermittelt wird.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung einer als Feldhäcksler ausgeführten landwirtschaftlichen Arbeitsmaschine
- Figur 2: eine Detailseitenansicht der Gegenschneidenverstellung
- Figur 3: eine Detaildraufsicht der Gegenschneidenverstellung
- Figur 4: die Gegenschneide im Detail
- Figur 5: die Gegenschneide mit zugehörigern Signalverarbeitungseinrichtungen im Detail

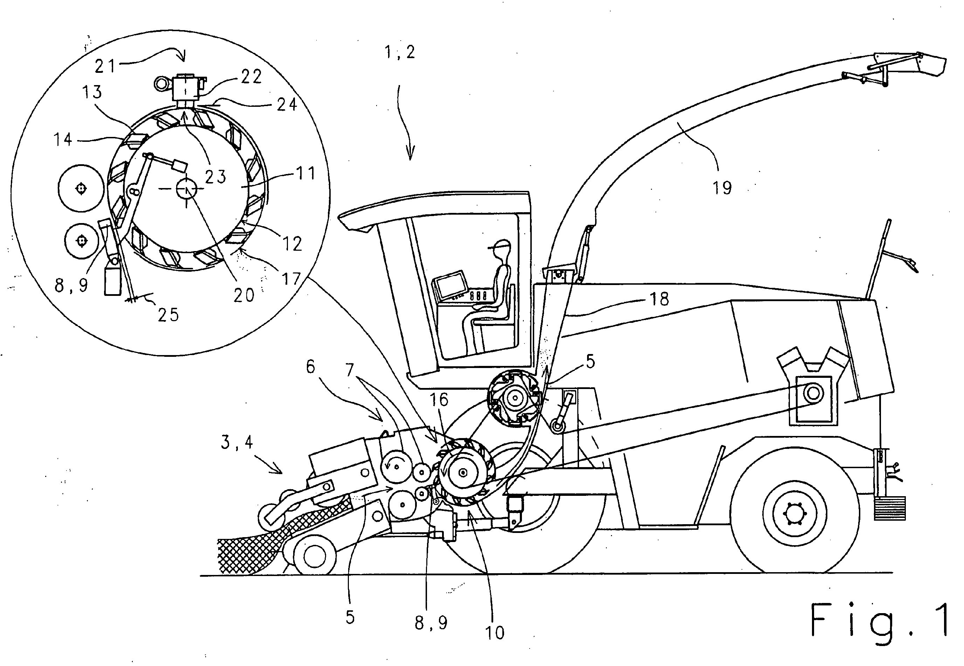

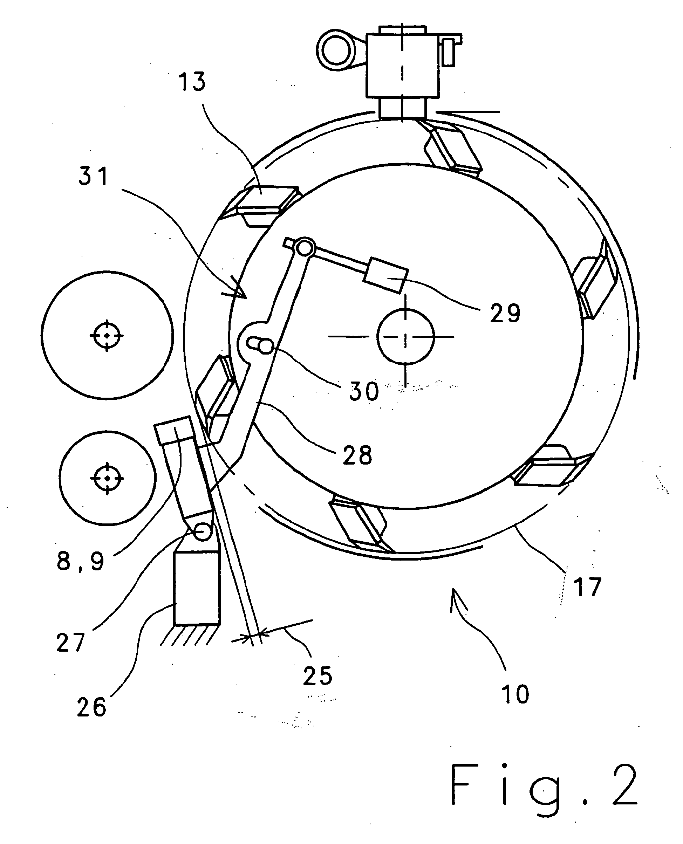

Figur 1 zeigt eine als Feldhäcksler 2 ausgeführte landwirtschaftliche Arbeitsmaschine 1, der im dargestellten Ausführungsbeispiel frontseitig ein als Pick-up 3 ausgeführtes Vorsatzgerät 4 zugeordnet ist. Das von der Pick-up 3 aufgenommene Erntegut 5 wird in deren rückwärtigen Bereich an die von einem Einzugsgehäuse 6 aufgenommenen Einzugs- und Vorpresswalzen 7 übergeben. Im Bereich der Einzugs- und Vorpresswalzen 7 wird der Erntegutstrom 5 beschleunigt und zugleich in Abhängigkeit vom Durchgangsspalt zwischen den paarweise angeordneten Einzugs- und Vorpresswalzen 7 verdichtet. Im rückwärtigen Bereich der Einzugs- und Vorpresswalzen 7 wird der Erntegutstrom 5 über eine noch näher zu beschreibende, das erfindungsgemäß Körperschall leitende Bauteil 9 bildende, verstellbare Gegenschneide 8 in ein nachgeordnetes Häckselorgan 10 gefördert. Das Häckselorgan 10 wird im Wesentlichen von einem zylindrischen Trommelkörper 11 gebildet, dem an seiner Umfangsfläche 12 eine Vielzahl von Häckselmessern 13 zugeordnet sind, die zumindest auf ihrer dem aus den Einzugs- und Vorpresswalzen 7 austretenden Gutstrang 5 zugewandten Seite eine Schneidkante 14 aufweisen. In der Betriebsstellung wird das Häckselorgan 11 über einen beliebig ausgeführten Antrieb in eine entgegen dem Uhrzeigersinn weisende Drehbewegung 16 versetzt, wobei die Schneidkanten 14 der Häckselmesser 13 eine den Schneidbereich definierende zylindrische Hüllfläche 17 aufspannen. Sobald der Gutstrang 5 im Bereich der Gegenschneide 8 in diese Hüllfläche 17 eintritt, wird der Gutstrang 5 von den umlaufenden Häckselmessern 13 zerkleinert und in Abhängigkeit von der Gestalt der Häckselmesser 13 und des Trommelkörpers 11 in einen an das Häckselorgan 10 anschließenden, in vertikaler Richtung verlaufenden Austragschacht 18 gefördert. Dabei durchläuft der Gutstrang 5 zumindest einen Nachbeschleuniger, der dem Gutstrang 5 die erforderliche kinetische Energie verleiht die dessen Austrag aus dem Feldhäcksler 2 über einen verschwenkbaren Auswurfkrümmer 19 ermöglicht. Wegen der hohen Durchsatzleistungen von Feldhäckslern 2 sind die Schneidkanten 14 der Häckselmesser 13 hohen Schnittkräften ausgesetzt, die letztlich zu einem relativ schnellen Verschleiß der Häckselmesser 13 führen. Damit das Nachschleifen der Schneidkanten 14 der Häckselmesser 13 unkompliziert und schnell durchgeführt werden kann ist dem Häckselorgan 10 obenseitig eine in Achsrichtung 20 des Trommelkörpers 11 verfahrbare Schleifeinrichtung 21 zugeordnet, die zumindest einen Schleifstein 22 aufnimmt, der über eine öffen- und wieder verschließbare Zugangsöffnung 23 mit den Schneidkanten 14 der Häckselmesser 13 in Kontakt bringbar ist. Dieser Schleifvorgang läuft dabei in der Regel so ab, dass entweder der Betreiber des Feldhäckslers 2 den Schleifvorgang auslöst oder mittels Schnittkraftüberwachung ein selbsttätiges Auslösen des Schleifvorganges bewirkt wird. Dabei wird zunächst die Zugangsöffnung 23 durch Verschwenken der Verschlussklappe 24 freigegeben und sodann die Schleifeinrichtung 21 so von einer seitlichen Ruheposition in eine Arbeitsposition bewegt, dass der oder die Schleifsteine 22 mit den Schnittkanten 14 der Häckselmesser 13 in Wirkverbindung treten können. Indem das Häckselorgan 10 während des Schleifvorganges umläuft und die Schleifeinrichtung 21 mehrmals entlang der sich in Achsrichtung 20 des Trommelkörpers 11 erstreckenden Zugangsöffnung 23 hin- und herbewegt wird, können in einem einzigen Schleifvorgang alle Häckselmesser 13 des Häckselorgans 10 angeschliffen werden. Während dieses Schleifvorganges wird Material von den Häckselmessern 13 abgetragen, sodass sich im Ergebnis der Durchmesser der von den umlaufenden Schneidkanten 14 definierten Hüllfläche 17 verringert. Im Ergebnis führt dies dazu, dass sich der zwischen dieser Hüllfläche 17 und der Gegenschneide 8 ausbildende Schneidspalt 25 vergrößert, was letztlich zu höheren Schnittkräften und einer schlechteren Schnittqualität führen würde. Um diese Änderung des Schneidspaltes 25 zu korrigieren, kann die Gegenschneide 8 gemäß Figur 2 um eine im Maschinengestell 26 gelagerte Schwenkachse 27 verschwenkt werden. Im einfachsten Fall wird hierfür die Gegenschneide 8 beidseitig von Führungshebeln 28 drehfest aufgenommen, die einenends von Linearmotoren 29 verschwenkbar geführt werden. Damit eine sichere Lagefixierung der Gegenschneide 8 gewährleistet ist, müssen die Führungshebel 28 von den Linearmotoren 29 gegen die Wirkung von sogenannten Reibungsbremsen 30 bewegt werden. Durch den schematisch dargestellten Verschwenkmechanismus 31 kann die Gegenschneide 8 von dem Hüllkreis 17 der Häckselmesser 13 weg oder auf diesen zu bewegt werden, sodass auch nach jedem Schleifvorgang wiederum ein geringer Abstand 25 zwischen der Hüllfläche 17 und der Gegenschneide 8 einstellbar ist.

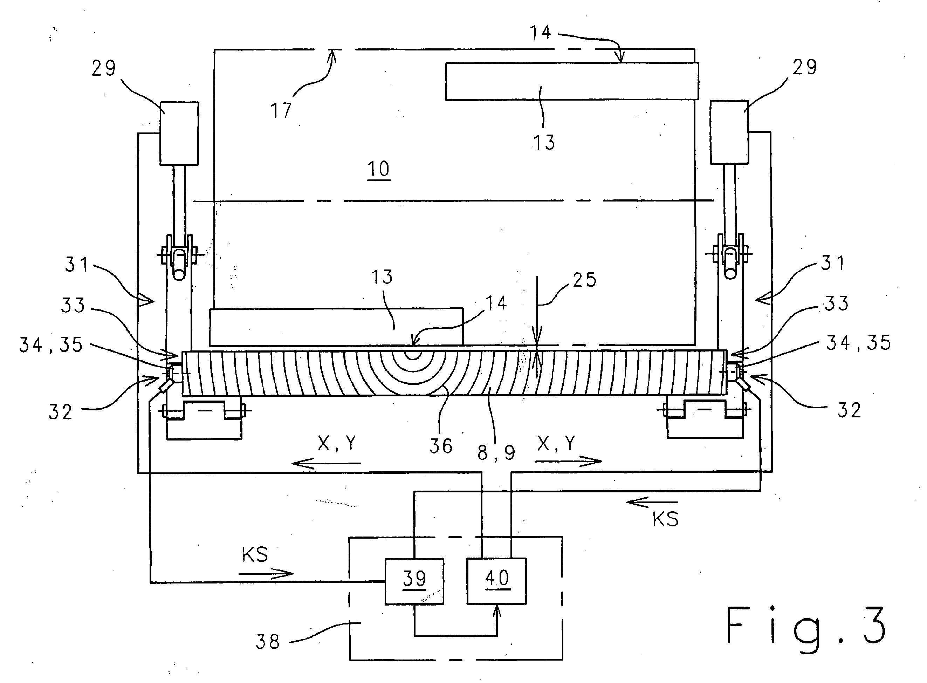

Damit bei diesem Einstellvorgang zudem sichergestellt ist, dass die Gegenschneide 8 nicht mit den Häckselmessern 13 kollidieren kann, wird die Bewegung der Gegenschneide durch eine in Figur 3 schematisch dargestellte Klopfsensoranordnung 32 überwacht. Im dargestellten Ausführungsbeispiel sind der Gegenschneide 8 an ihren beiden Stirnseiten 33 als piezoelektrische Klopfsensoren 34 ausgeführte Sensoren 35 zugeordnet, die in an sich bekannter Weise in der Lage sind, die Gegenschneide 8 durchlaufende Schallwellen 36 zu registrieren. Bisher wurde dieses Verhalten dafür genutzt, dass der Gegenschneide 8 ein solcher Sensor 35 zugeordnet war, der bei einer Lageänderung der Gegenschneide 8 die sich in der Gegenschneide 8 fortpflanzenden Schallwellen registrierte. Dabei wird die Intensität der Schallwellen im Wesentlichen von dem Abstand 25 der Gegenschneide 8 zu der von den umlaufenden Häckselmessern 13 gebildeten Hüllfläche 17 bestimmt und wird um so intensiver sein je geringer dieser Abstand 25 ist. Im dargestellten Ausführungsbeispiel sind die der Gegenschneide 8 zugeordneten Klopfsensoren 34 mit einer noch näher zu beschreibenden Auswerteinheit 38 gekoppelt, in der die von den Klopfsensoren generierten dem Körperschall proportionalen Körperschallsignale KS unter Anwendung von in der Auswerteinheit 38 hinterlegten Berechnungsalgorithmen 39 den Abstand 25 beschreibende Abstandssignale AS generieren, die in Abhängigkeit von Grenzwerten 40 für den Abstand 25 zwischen der Gegenschneide 8 und der Schneidkante 14 der Häckselmesser 13 ein Antriebssignal X oder ein Stoppsignal Y für die Linearmotoren 29 des Verschwenkmechanismus 31 der Gegenschneide 8 generieren. In Abhängigkeit von diesen Antriebssignalen X oder Stoppsignalen Y wird die Gegenschneide entweder auf die Hüllfläche 17 des Häckselorgans 10 zu bewegt oder, sofern der einzuhaltende Grenzwert 40 für den Abstand 25 zwischen Gegenschneide 8 und Hüllfläche 17 erreicht ist, angehalten.

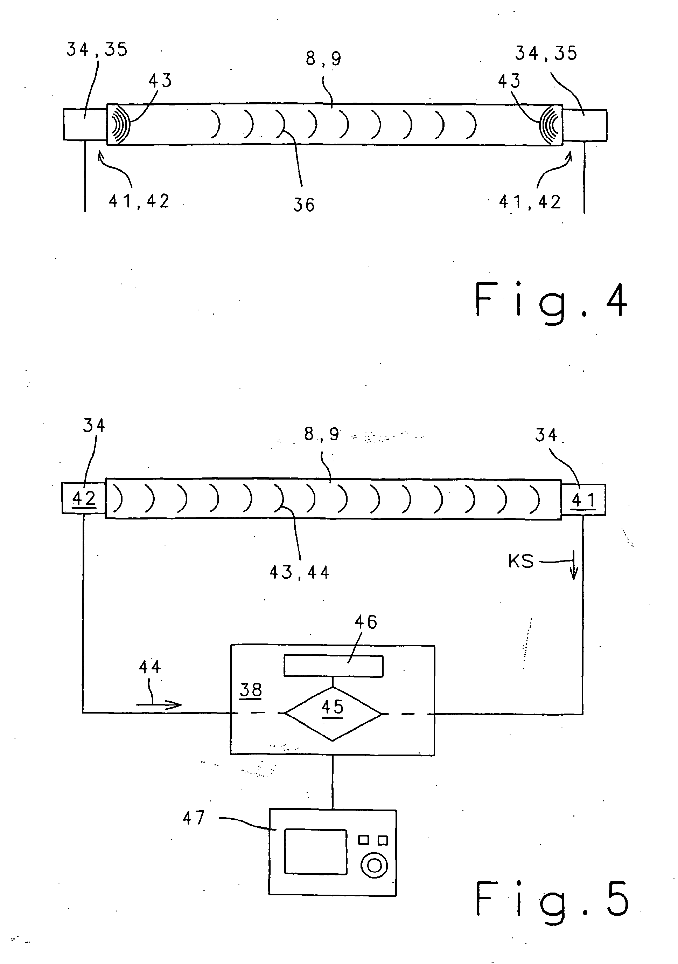

Nach Figur 4 sind die der Gegenschneide 8 zugeordneten Klopfsensoren 34 in erfindungsgemäßer Weise so ausgeführt, dass sie sowohl als Körperschallempfänger 41 oder als Körperschallquelle 42 betrieben werden können. Dies bedeutet, dass die Körperschallsensoren einerseits zur Einstellung des Anstandes 25 zwischen der Gegenschneide 8 und den umlaufenden Häckselmessern 13 im Wesentlichen von der Änderung dieses Abstandes 25 beeinflusste, die Gegenschneide 8 durchlaufende Schallwellen 36 sensieren können. Andererseits sind die Klopfsensoren 34 aber auch in der Lage selbst abwechselnd Klopfsignale 43 zu generieren, die jeweils von dem anderen Klopfsensor 34 empfangen werden. Dies schafft, wie nachfolgend noch näher beschrieben, die Möglichkeit, dass die Klopfsensoren zur gegenseitigen Eichung eingesetzt werden können. Figur 5 erläutert diesen Fall im Detail. Der der Gegenschneide 8 linksseitig zugeordnete Klopfsensor 34 fungiert als Körperschallquelle 42 während der rechtsseitig angeordnete Klopfsensor 34 als Körperschallempfänger 41 betrieben wird. Zur Überprüfung der Funktionsfähigkeit des als Körperschallempfänger 41 betriebenen Klopfsensors 34 sendet die Körperschallquelle 42 nach Amplitute und Frequenz definierte Klopfsignale 43 in Form von Erregersignalen 44 aus, die in dem Körperschallempfänger 41 zur Generierung von Körperschallsignalen KS führen. In der bereits beschriebenen Auswerteinheit 38 werden die von der Körperschallquelle 42 und von dem Körperschallempfänger 41 generierten Signale 44, KS in einem ersten Programmschritt 45 miteinander verglichen, wobei die Qualität ihrer Übereinstimmung durch editierbare Grenzwerte 46 bestimmt wird. Indem die Grenzwerte in Abhängigkeit von beispielsweise dem Wärmedehnungsverhalten und den Eigenschwingungen der landwirtschaftlichen Arbeitsmaschine 1 editierbar sind, wird zudem auf einfache Weise eine Möglichkeit geschaffen, dass die Sensorüberprüfung feinfühlig an sich ändernde äußere Bedingungen angepasst werden kann. Weiter ist die Auswerteinheit 38 mit einer Anzeigeeinheit 47 gekoppelt, in der die Ergebnisse des Vergleichs 45 dem Betreiber anzeigbar sind. Im einfachsten Fall kann hier die Information ergehen, dass der überprüfte Sensor 41 qualitativ unbrauchbare Körperschallsignale KS liefert und folglich ausgetauscht oder nachjustiert werden muss. Es liegt im Rahmen der Erfindung, dass das in Figur 5 dargestellte Ausführungsbeispiel auch umgekehrt ausgeführt sein kann, sodass die Körperschallsensoren 34 dann entgegengesetzt als Körperschallquelle 42 oder als Körperschallempfänger 41 betrieben werden. Damit sich die Präzision des Eichvorganges weiter erhöht, können auch die Erregeramplitude und die Erregerfrequenz der Erregersignale 44 änderbar sein, sodass hierdurch ebenfalls feinfühliger auf unterschiedliche äußere Randbedingungen reagiert werden kann. Zur Ausblendung von signalverfälschenden Störsignalen kann weiter die Einstellbarkeit des Frequenzganges der Körperschallsensoren 34 vorgesehen sein, wobei dies im einfachsten Fall dadurch erreichbar ist, dass die Berechnungsalgorithmen 39 der Auswerteinheit 38 hoch- und niederfrequente Störsignale herausfiltern.

Es liegt im Rahmen des Könnens eines Fachmanns das beschriebene Verfahren und die zugehörige Vorrichtung in nicht dargestellter Weise abzuwandeln oder in anderen Maschinensystemen einzusetzen, um die beschriebenen Effekte zu erzielen, ohne dabei den Rahmen der Erfindung wie beansprucht zu verlassen.

### Bezugszeichenliste:

- 1: landwirtschaftliche Arbeitsmaschine
- 2: Feldhäcksler
- 3: Pick-up
- 4: Vorsatzgerät
- 5: Erntegutstrom
- 6: Einzugsgehäuse
- 7: Einzugs- und Vorpresswalzen
- 8: Gegenschneide
- 9: Bauteil
- 10: Häckselorgan
- 11: Trommelkörper
- 12: Umfangsfläche
- 13: Häckselmesser
- 14: Schneidkante
- 16: Drehbewegung
- 17: Hüllfläche
- 18: Austragschacht
- 19: Auswurfkrümmer
- 20: Achsrichtung
- 21: Schleifeinrichtung
- 22: Schleifstein
- 23: Zugangsöffnung
- 24: Verschlussklappe
- 25: Schneidspalt
- 26: Maschinengestell
- 27: Schwenkachse
- 28: Führungshebel
- 29: Linearmotor
- 30: Reibungsbremse
- 31: Verschwenkmechanismus
- 32: Klopfsensoranordnung
- 33: Stirnseite
- 34: piezoelektrischer Klopfsensor
- 35: Sensor
- 36: Schallwellen
- 38: Auswerteinheit
- 39: Berechnungsalgorithmus
- 40: Grenzwert
- 41: Körperschallempfänger
- 42: Körperschallquelle
- 43: Klopfsignal
- 44: Erregersignal
- 45: Programmschritt
- 46: Grenzwert
- 47: Anzeigeeinheit

- AS: Abstandssignal
- KS: Körperschallsignal
- X: Antriebssignal
- Y: Stoppsignal

## Patentansprüche

1. Sensoranordnung für eine landwirtschaftliche Arbeitsmaschine zur Detektion von Körperschalischvvingungen in einem Bauteil, wobei dem Bauteil (8. 9) ein erster Sensor (35) und zumindest ein weiterer Sensor (35) zur Detektion von sich bei einer Lageänderung in dem Bauteil (8, 9) fortpflanzenden Körperschallschwingungen (36) zugeordnet ist,
**dadurch gekennzeichnet,**
**dass** zumindest ein Sensor (35) auch als Körperschallquelle (42) für zumindest einen weiteren Sensor (35) betreibbar ist.

2. Sensoranordnung für eine landwirtschaftliche Arbeitsmaschine nach Anspruch 1,
**dadurch gekennzeichnet,**
**dass** der eine Sensor (35) als Körperschallquelle (42) des wenigstens einen weiteren als Körperschallempfänger (41) betriebenen Sensors (35) arbeitet.

3. Sensoranordnung für eine landwirtschaftliche Arbeitsmaschine nach einem der vorhergehenden Ansprüche,
**dadurch gekennzeichnet,**
**dass** die von der Körperschallquelle (42) generierten Erregersignale (44) und die von dem Körperschallempfänger (41) generierten Körperschallsignale (KS) an eine Auswerteinheit (38) übergeben und in dieser miteinander verglichen werden.

4. Sensoranordnung für eine landwirtschaftliche Arbeitsmaschine nach Anspruch 3,
**dadurch gekennzeichnet,**
**dass** das Vergleichsergebnis in einer Anzeigeeinheit (47) visualisiert wird.

5. Sensoranordnung für eine landwirtschaftliche Arbeitsmaschine nach Anspruch 3,
**dadurch gekennzeichnet,**
**dass** der Vergleich durch Grenzwerte (46) bestimmt wird und die Grenzwerte (46) editierbar sind.

6. Sensoranordnung für eine landwirtschaftliche Arbeitsmaschine nach Anspruch 5,
**dadurch gekennzeichnet;**
**dass** die Grenzwerte (46) in Abhängigkeit vom Wärmedehnungsverhatten und den Eigenschwingungen der landwirtschaftlichen Arbeitsmaschine (1) editiert werden.

7. Sensoranordnung für eine landwirtschaftliche Arbeitsmaschine nach einem der vorhergehenden Ansprüche,
**dadurch gekennzeichnet,**
**dass** die ersten und zweiten Sensoren (35) als piezoelektrische Klopfsensoren (34) ausgebildet sind.

8. Sensoranordnung für eine landwirtschaftliche Arbeitsmaschine nach einem der vorhergehenden Ansprüche,
**dadurch gekennzeichnet,**
**dass** die Erregerfrequenz und/oder die Erregeramplitude der von dem ersten oder zweiten Sensoren (35) generierten Erregersignale (44) einstellbar ist.

9. Sensoranordnung für eine landwirtschaftliche Arbeitsmaschine nach einem der vorhergehenden Ansprüche,
**dadurch gekennzeichnet,**
**dass** der Frequenzgang der ersten und zweiten Sensoren (35) einstellbar ist.

10. Sensoranordnung für eine landwirtschaftliche Arbeitsmaschine nach einem der vorhergehenden Ansprüche,
**dadurch gekennzeichnet,**
**dass** das die ersten und zweiten Sensoren (35) verbindende Bauteil (8, 9) Körperschall leitend ausgeführt ist.

11. Sensoranordnung für eine landwirtschaftliche Arbeitsmaschine nach einem der vorhergehenden Ansprüche,
**dadurch gekennzeichnet,**
**dass** die landwirtschaftliche Arbeitsmaschine (1) als Feldhäcksler (2) ausgeführt ist und das Körperschall leitende Bauteil (9) von der Gegenschneide (8) des Häckselorgans (10) gebildet wird.

12. Sensoranordnung für eine landwirtschaftliche Arbeitsmaschine nach Anspruch 11,
**dadurch gekennzeichnet,**
**dass** die Sensoren (35) an den Stirnseiten (33) der Gegenschneide (8) lösbar mit der Gegenschneide (8) verbunden sind.

13. Verfahren zum Betreiben einer Sensoranordnung für eine landwirtschaftliche Arbeitsmaschine zur Detektion von KörperschalischvAngungen in einem Bauteil,
**dadurch gekennzeichnet,**
**dass** dem Bauteil (8, 9) ein erster Sensor (35) und zumindest ein weiter Sensor (35) zur Detektion von Körperschallschwingungen (36)zugeordnet ist und wobei einer der Sensoren (35, 42) mit einem Erregersignal (44) definierter Amplitude und Frequenz erregt wird und zugleich an dem weiteren Sensor (35, 41) das von dem Erregersignal (44) abhängende Körperschallsignal (KS) ermittelt wird und in einer Auswerteinheit (38) mittels Vergleich eine qualitative Bewertung des Körperschallsignals (KS) vorgenommen wird.

14. Verfahren zum Betreiben einer Sensoranordnung für eine landwirtschaftliche Arbeitsmaschine nach Anspruch 13,
**dadurch gekennzeichnet,**
**dass** das Erregersignal (44) variiert werden kann.

15. Verfahren zum Betreiben einer Sensoranordnung für eine landwirtschaftliche Arbeitsmaschine nach einem der Ansprüche 13-14,
**dadurch gekennzeichnet,**
**dass** das Körperschallsignal (KS) grenzwertabhängig und/oder frequenzgangabhängig ermittelt wird.

16. Verfahren zum Betreiben einer Sensoranordnung für eine landwirtschaftliche Arbeitsmaschine nach einem der Ansprüche 13-15,
**dadurch gekennzeichnet,**
**dass** die Sensoren (35) sowohl Körperschallquelle (42) als auch Körperschallempfänger (41) sein können.

17. Sensoranordnung für eine landwirtschaftliche Arbeitsmaschine nach Anspruch 1, **dadurch gekennzeichnet, dass** die Sensoren (35) als Körperschallquelle (42) und/oder als Körperschallempfänger (41) betreibbar sind.

## Claims

1. A sensor arrangement for an agricultural working machine for the detection of structure-bome sound vibrations in a component, wherein associated with the component (8, 9) are a first sensor (35) and at least one further sensor (35) for the detection of structure-borne sound vibrations (36) propagated in the event of a change in position in the component (8, 9),
**characterised in that**
at least one sensor (35) can also be operated as a structure-borne sound source (42) for at least one further sensor (35).

2. A sensor arrangement for an agricultural working machine according to claim 1 **characterised in that** the one sensor (35) operates as a structure-borne sound source (42) of the at least one further sensor (35) which is operated as a structure-borne sound receiver (41).

3. A sensor arrangement for an agricultural working machine according to one of the preceding claims **characterised in that** the exciter signals (44) generated by the structure-borne sound source (42) and the structure-borne sound signals (KS) generated by the structure-borne sound receiver (41) are transferred to an evaluation unit (38) and compared together therein.

4. A sensor arrangement for an agricultural working machine according to claim 3 **characterised in that** the comparison result is displayed in a display unit (47).

5. A sensor arrangement for an agricultural working machine according to claim 3 **characterised in that** the comparison is determined by limit values (46) and the limit values (46) are editable.

6. A sensor arrangement for an agricultural working machine according to claim 5 **characterised in that** the limit values (46) are edited in dependence on the thermal expansion behaviour and the natural vibrations of the agricultural working machine (1).

7. A sensor arrangement for an agricultural working machine according to one of the preceding claims **characterised in that** the first and second sensors (35) are in the form of piezoelectric knock sensors (34).

8. A sensor arrangement for an agricultural working machine according to one of the preceding claims **characterised in that** the exciter frequency and/or the exciter amplitude of the exciter signals (44) generated by the first or second sensors (35) is adjustable.

9. A sensor arrangement for an agricultural working machine according to one of the preceding claims **characterised in that** the frequency characteristic of the first and second sensors (35) is adjustable.

10. A sensor arrangement for an agricultural working machine according to one of the preceding claims **characterised in that** the component (8, 9) connecting the first and second sensors (35) is adapted to conduct structure-borne sound.

11. A sensor arrangement for an agricultural working machine according to one of the preceding claims **characterised in that** the agricultural working machine (1) is in the form of a forage harvester (2) and the component (9) conducting structure-borne sound is formed by the co-operating cutter (8) of the chopping unit (10).

12. A sensor arrangement for an agricultural working machine according to claim 11 **characterised in that** the sensors (35) at the ends (33) of the co-operating cutter (8) are releasably connected to the co-operating cutter (8).

13. A method of operating a sensor arrangement for an agricultural working machine for the detection of structure-borne sound vibrations in a component,
**characterised in that**
a first sensor (35) and at least one further sensor (35) for the detection of structure-borne sound vibrations (36) is associated with the component (8, 9) and wherein one of the sensors (35, 42) is excited with an exciter signal (44) of defined amplitude and frequency and at the same time the structure-bome sound signal (KS) dependent on the exciter signal (44) is ascertained at the further sensor (35, 41) and qualitative assessment of the structure-borne sound signal (KS) is effected by means of comparison in an evaluation unit (38).

14. A method of operating a sensor arrangement for an agricultural working machine according to claim 13 **characterised in that** the exciter signal (44) can be varied.

15. A method of operating a sensor arrangement for an agricultural working machine according to one of claims 13 and 14 **characterised in that** the structure-borne sound signal (KS) is ascertained in dependence on a limit value and/or in dependence on the frequency characteristic.

16. A method of operating a sensor arrangement for an agricultural working machine according to one of claims 13 to 15 **characterised in that** the sensors (35) can be both a structure-borne sound source (42) and also a structure-borne sound receiver (41).

17. A sensor arrangement for an agricultural working machine according to claim 1 **characterised in that** the sensors (35) can be operated as a structure-borne sound source (42) and/or as a structure-borne sound receiver (41).

## Revendications

1. Agencement de capteurs pour une machine agricole de travail, destiné à détecter des vibrations de bruits solidiens dans une pièce, dans lequel sont associés à la pièce (8, 9) un premier capteur (35) et au moins un deuxième capteur (35) afin de détecter des vibrations de bruits solidiens (36) qui se propagent dans la pièce (8, 9) en cas de modification de la position, **caractérisé en ce qu'**au moins un capteur (35) peut également fonctionner comme source de bruits solidiens (42) pour au moins un autre capteur (35).

2. Agencement de capteurs pour une machine agricole de travail selon la revendication 1, **caractérisé en ce que** le premier capteur (35) fonctionne comme source de bruits solidiens (42) pour ledit au moins un autre capteur (35) fonctionnant en récepteur de bruits solidiens (41).

3. Agencement de capteurs pour une machine agricole de travail selon l'une des revendications précédentes, **caractérisé en ce que** les signaux excitateurs (44) produits par la source de bruits solidiens (42) et les signaux de bruits solidiens (KS) produits par le récepteur de bruits solidiens (41) sont envoyés à une unité d'analyse (38) et y sont comparés l'un à l'autre.

4. Agencement de capteurs pour une machine agricole de travail selon la revendication 3, **caractérisé en ce que** le résultat de la comparaison est visualisé sur une unité d'affichage (47).

5. Agencement de capteurs pour une machine agricole de travail selon la revendication 3, **caractérisé en ce que** la comparaison est déterminée par des valeurs limites (46) et les valeurs limites (46) peuvent être éditées.

6. Agencement de capteurs pour une machine agricole de travail selon la revendication 5, **caractérisé en ce que** les valeurs limites (46) sont éditées en fonction du comportement de dilatation thermique et des vibrations propres de la machine agricole de travail (1).

7. Agencement de capteurs pour une machine agricole de travail selon l'une des revendications précédentes, **caractérisé en ce que** les premiers et deuxièmes capteurs (35) prennent la forme de capteurs de chocs piézoélectriques (34).

8. Agencement de capteurs pour une machine agricole de travail selon l'une des revendications précédentes, **caractérisé en ce que** la fréquence d'excitation et/ou l'amplitude d'excitation des signaux excitateurs (44) produits par le premier et le deuxième capteur (35) sont réglables.

9. Agencement de capteurs pour une machine agricole de travail selon l'une des revendications précédentes, **caractérisé en ce que** l'allure en fréquence du premier et du deuxième capteur (35) est réglable.

10. Agencement de capteurs pour une machine agricole de travail selon l'une des revendications précédentes, **caractérisé en ce que** la pièce (8, 9) reliant les premier et deuxième capteurs (35) est conçue pour conduire les bruits solidiens.

11. Agencement de capteurs pour une machine agricole de travail selon l'une des revendications précédentes,
**caractérisé en ce que** la machine agricole de travail (1) prend la forme d'une ensileuse (2) et la pièce (9) conduisant les bruits solidiens est formée par le contre-couteau (8) de l'organe de hachage (10).

12. Agencement de capteurs pour une machine agricole de travail selon la revendication 11, **caractérisé en ce que** les capteurs sont fixés de manière amovible sur les faces frontales (33) du contre-couteau (8).

13. Procédé d'exploitation d'un agencement de capteurs pour une machine agricole de travail, destiné à détecter des vibrations de bruits solidiens dans une pièce, **caractérisé en ce que** sont associés à la pièce (8, 9) un premier capteur (35) et au moins un deuxième capteur (35) afin de détecter des vibrations de bruits solidiens (36), dans lequel un des capteurs (35, 42) est excité par un signal excitateur (44) d'amplitude et de fréquence définies, dans lequel simultanément l'autre capteur (35, 41) détermine le signal de bruits solidiens (KS) qui dépend du signal excitateur (44) et dans lequel une analyse qualitative du signal de bruits solidiens (KS) est opérée par comparaison dans une unité d'analyse (38).

14. Procédé d'exploitation d'un agencement de capteurs pour une machine agricole de travail selon la revendication 13, **caractérisé en ce que** le signal excitateur (44) peut être varié.

15. Procédé d'exploitation d'un agencement de capteurs pour une machine agricole de travail selon l'une des revendications 13 et 14, **caractérisé en ce que** le signal de bruits solidiens (KS) est déterminé en termes de valeurs limites ou en termes d'allure en fréquence.

16. Procédé d'exploitation d'un agencement de capteurs pour une machine agricole de travail selon l'une des revendications 13 à 15, **caractérisé en ce que** les capteurs (35) peuvent être aussi bien une source de bruits solidiens (42) qu'un récepteur de bruits solidiens (41).

17. Agencement de capteurs pour une machine agricole de travail selon la revendication 1, **caractérisé en ce que** les capteurs (35) peuvent fonctionner comme source de bruits solidiens (42) et/ou comme récepteur de bruits solidiens (41).
